# EUROPEAN PATENT APPLICATION

(11) **EP 4 197 343 A1**
(43) Date of publication of application: **21.06.2023**
(21) Application number: 21215971.9
(22) Date of filing: 20.12.2021
(51) Int. Cl.: A23L 2/54, B01F 23/236, B01F 23/2361, B01F 23/237, B67D 1/00

(54) **BEVERAGE CARBONATING DEVICE**

(71) Applicant: Versuni Holding B.V., 5656 AE Eindhoven (NL)
(72) Inventor: SINNEMA, Anke Gerda, 5656 AE Eindhoven (NL); LOOPSTRA, Kasper Roelof, 5656 AE Eindhoven (NL); BERTRAM, Dietrich, 5656 AE Eindhoven (NL)
(74) Representative: Vollering, Stefanus Franciscus Maria

(57) **Abstract**

The present invention relates to a beverage carbonating device (10), comprising a carbon dioxide production unit (12) that is configured to produce carbon dioxide gas by mixing reactants; a pressure container (14) that is fluidly connected to the carbon dioxide production unit (12) and configured to store the produced carbon dioxide gas in a pressurized gaseous state; and a gas outlet valve (16) that is fluidly connected to the pressure container (14) and configured to seal the pressure container (14) when being closed and to release the carbon dioxide gas in the gaseous state from the pressure container (14) when being opened.

## Description

### FIELD OF THE INVENTION

The present invention relates to a beverage carbonating device. Such devices are sometimes also referred to as beverage carbonators or simply as carbonators. These devices are typically provided as domestic/kitchen appliances and used to carbonate water or other beverages by means of carbon dioxide (CO₂).

### BACKGROUND OF THE INVENTION

Various possibilities are currently available to get carbonated water or other carbonated beverages. A first possibility, which is the most common one, includes ready-to-drink beverages that are already carbonated during production by the producer. However, more and more people carbonate their water themselves by means of home carbonation devices.

A lot of home carbonating devices use CO₂-catridges to carbonate water or other beverages. The beverage that is to be carbonated is typically filled up in a bottle and carbonated afterwards by arranging the filled bottle below a dispenser of the device that dispenses the carbon dioxide from the cartridge into the beverage that is filled up in the bottle.

Compared to the first possibility of buying ready-to-drink beverages that are already carbonated, the latter mentioned possibility is from an ecological standpoint typically more beneficial, as less plastic and other harmful materials need to be produced. On the other hand, however, the handling of the CO₂-cartridges and the fact that they need to be exchanged quite often appears to be cumbersome for a lot of users.

A third possibility are home carbonating devices which use a mix of acid and sodium bicarbonate (baking soda) to produce the carbon dioxide internally in the device. A beverage carbonation system of this type is exemplarily known from CA 2 875 899 A1. The known beverage carbonation system includes a carbonator and a container, that is removably engageable with the carbonator. The container may for instance be provided in the form of a bottle, and includes a container outlet valve and a container inlet valve that are fluidly engageable with an outlet port and an inlet port of the carbonator, respectively. When the container is engaged with the carbonator, a pump transfers some liquid from the container to the carbonator, to produce carbon dioxide gas. This carbon dioxide gas is then pumped back into the container to carbonate the remaining liquid in said container. When the container is disengaged from the carbonator, the container outlet valve and the container inlet valve are closed to fluidly seal the container containing the carbonated liquid.

The system disclosed in CA 2 875 899 A1 appears to be more sustainable than the devices and systems mentioned at the outset. However, the system still has several drawbacks.

First of all, special bottles are needed that have an interface with an inlet and an outlet valve compatible to the corresponding interface at the carbonator.

Secondly, the carbonation process takes quite a while with such kind of system. First, some amount of water needs to be withdrawn from the container. Next, the carbon dioxide needs to be generated by mixing said water with reactants, typically acid and sodium bicarbonate. The generated carbon dioxide then needs to be returned to the container and introduced into the water. While the end user typically does not recognize these steps of withdrawing some water from the container, generating the carbon dioxide and dispensing the carbon dioxide into the container, the user typically recognizes that it takes some while until the process is finished, i.e. until the beverage is carbonated.

### SUMMARY OF THE INVENTION

It is an object of the present invention to provide a beverage carbonating device that overcomes or at least alleviates one or more of the above-mentioned drawbacks of the known beverage carbonating devices. It is particularly an object to provide a beverage carbonating device with a sustainable handling and that is able to carbonate beverages comparably fast.

In a first aspect of the present invention a beverage carbonating device is presented that comprises:
a carbon dioxide production unit that is configured to produce carbon dioxide gas by mixing reactants, e.g. at least two reactants;
a pressure container that is fluidly connected or connectable to the carbon dioxide production unit and configured to store the produced carbon dioxide gas in a pressurized gaseous state;
a gas outlet valve that is fluidly connected to the pressure container and configured to seal the pressure container when being closed and to release the carbon dioxide gas in the gaseous state from the pressure container when being opened.

Preferred embodiments of the invention are defined in the dependent claims. The present invention is based on the idea of providing a pressure container that is used as carbon dioxide gas buffer for storing the carbon dioxide that is produced in the carbon dioxide production unit. Accordingly, carbon dioxide may be produced internally in the device beforehand, i.e. prior to it being needed to carbonate a beverage. The produced carbon dioxide can be stored in the pressure container until it is needed. It can be stored in a pressurized gaseous state, so that it is directly ready for use. Thus, when a user wants to carbonate a beverage, the carbonation process can start instantaneously upon request of the user. No preparation time is needed for the production of the carbon dioxide, since the carbon dioxide has already been produced beforehand and stored in the pressure container. Thus, the beverage carbonating device according to the invention can be as fast as a prior art beverage carbonating device that uses a CO₂-cartridge, but without featuring the disadvantages of such a device, i.e. of having to replace and return empty cartridges. Instead, the beverage carbonating device according to the invention can produce carbon dioxide gas internally in the carbon dioxide production unit by mixing suitable reactants. A CO₂-cartridge is not needed.

No special bottles or other drinking vessels are needed. Almost every beverage vessel may be used with the beverage carbonating device according to the present invention.

The reactants may for instance comprise sodium bicarbonate (NaHCO₃) and an acid, e.g. a citric acid, a tartaric acid, vinegar or pyruvate. Water may be used as further ingredient. Water may be introduced into the carbon dioxide production unit separately from the reactants. Alternatively, water may be premixed with the acid so as to form one of the reactants.

The pressure container may be provided as a separate entity that is separate from the carbon dioxide production unit but fluidly connected or connectable thereto. The pressure container may be releasably connected to the carbon dioxide production unit. This fluidic connection between the pressure container and the carbon dioxide production unit does not have to be a permanent fluidic connection, but may also be a controllable connection that is mechanically or electronically controlled to be opened and closed depending on one or more physical quantities/conditions.

The beverage carbonating device may comprise a control unit that is configured to control at least one of:
- the carbon dioxide production unit to produce the carbon dioxide gas and to store the produced carbon dioxide gas in the pressurized gaseous state in the pressure container;
- the gas outlet valve to be closed while storing the produced carbon dioxide gas in the pressure container; and
- the gas outlet valve to open, so as to release the stored pressurized carbon dioxide gas upon a user request.

The control unit can be realized in many different ways, e.g. as an electronic control unit comprising a processor, as a purely mechanical control, or as an electromechanical control.

The control unit may be configured to start the production of the carbon dioxide with the carbon dioxide production unit when the amount of carbon dioxide stored in the pressure container falls below a predetermined minimum storage amount. This ensures that there is always enough carbon dioxide gas to be instantly released upon a user request.

The user request may be realized in many different ways. For example, the user may press a certain button. Pressing this button may generate an electric signal that is transferred to the control unit which controls the gas outlet valve to open based on this signal. It is also possible that the button is mechanically connected to the gas outlet valve, such that by pressing the button the gas outlet valve is opened in a mechanical manner. Furthermore, the user request may be initiated by bringing a beverage vessel (e.g. a bottle) in contact with a predefined interface. This contact may similarly cause the gas outlet valve to be opened in a mechanical or electromechanical way. Similarly, the rate of carbonation of the beverage can be controlled manually, electromechanically or electronically.

In a further refinement, the beverage carbonating device comprises a connection interface that connects the pressure container to the carbon dioxide production unit.

The connection interface may be configured to ensure that at least 90 % by volume of a fluid comprising the produced carbon dioxide gas and entering the pressure container is gaseous. More preferably, the connection interface may be configured to ensure that at least 95% by volume of the fluid comprising the produced carbon dioxide gas and entering the pressure container is gaseous. Most preferably, the fluid entering the pressure container is 100 % gaseous. This provides the advantage that merely gas comprising the carbon dioxide gas is released via the gas outlet valve that is fluidly connected to the pressure container. Most preferably, pure carbon dioxide is released via the gas outlet valve.

The connection interface between the carbon dioxide production unit and the pressure container is preferably configured to prevent liquid from entering the pressure container. This may be realized by arranging the carbon dioxide production unit in gravity direction below the pressure container and arranging an overpressure valve between the carbon dioxide production unit and the pressure container. Thus, even though some amount of water is used in the carbon dioxide production unit for mixing the reactants for the carbon dioxide production, solely gas containing the CO₂ is released via the overpressure valve into the pressure container.

The carbon dioxide production unit may comprise a mixing chamber for the mixing of the reactants. The mixing chamber may be connected to the pressure container via the above-mentioned connection interface. In this mixing chamber, the ingredients for producing the carbon dioxide come together and the reaction between the reactants takes place. The produced carbon dioxide is then released into the pressure container and stored therein until it is released from the device via the gas outlet valve.

The carbon dioxide production unit may comprise a motorized mixing element that is configured to actively mix the reactants. This may increase the production rate of carbon dioxide, as it accelerates the reaction between the two reactants. The motorized mixing element may, for example, include a rotating element.

Alternatively or additionally, mixing of the reactants and production of the carbon dioxide may be enhanced by a heating element that is configured to heat the mixing process.

The carbon dioxide production unit may comprise a pump that is configured to pump water and/or at least one of the reactants into the mixing chamber.

This may further improve the mixing of the reactants and the production of the carbon dioxide. Said pump may be used to pump water as one of the ingredients for the production of the carbon dioxide into the mixing chamber of the carbon dioxide production unit.

According to a further refinement, the mixing chamber may comprise a first inlet that is fluidly connected to a first reactant supply via which a first reactant may be supplied, and a second inlet that is fluidly connected to a second reactant supply via which a second reactant may be supplied.

The first and second reactants supply may be done either manually by the user or controlled in an automatic manner by the control unit of the beverage carbonating device. Furthermore, it is possible to use pre-packed cartridges or sachets. In case of such cartridges, it is necessary to separate the at least two reactants within the cartridges until the production of the carbon dioxide shall be initiated.

In a further refinement, the first reactant supply comprises a first dosing unit that is configured to dose an amount of the first reactant supplied to the first inlet, and the second reactant supply comprises a second dosing unit that is configured to dose an amount of the second reactant supplied to the second inlet.

Dosing can be controlled by the control unit.

In a further alternative embodiment, the beverage carbonating device may comprise at least two storage containers for storing at least two reactants, wherein these two storage containers are connected to the mixing chamber, preferably via an electronically or electromechanically controlled valve.

In a further refinement, the presented beverage carbonating device may comprise a pressure sensor that is configured to detect a gas pressure in the pressure container, and a control unit that is configured to control the carbon dioxide production unit based on the gas pressure that is detected by the pressure sensor.

This provides the advantage that the amount of carbon dioxide produced in the carbon dioxide production unit may equal the amount that is effectively needed. For example, the control unit may be configured to control the carbon dioxide production unit to start producing carbon dioxide if the gas pressure in the pressure container is below a predetermined lower pressure limit, and to stop producing carbon dioxide if the gas pressure in the pressure container is above a predefined upper pressure limit.

The control unit may, for example, be configured to control the first dosing unit and the second dosing unit based on the gas pressure that is detected by the pressure sensor. In other words, the control unit in this case controls the supply of the at least two reactants into the mixing chamber based on the gas pressure detected by the pressure sensor.

In a further refinement, the beverage carbonating device may comprise a pressure sensor that is configured to detect a gas pressure in the pressure container, and a control unit that is configured to control the gas outlet valve based on the gas pressure that is detected by the pressure sensor.

For example, the control unit may be configured to control the gas outlet valve to be closed if the gas pressure detected by the pressure sensor is below a predefined lower pressure limit and/or the control unit may control the gas outlet valve to open if the gas pressure is above a predefined upper pressure limit. The latter mentioned lower and upper pressure limits do not need to be the same as the above-mentioned pressure limits based upon which the carbon dioxide production unit is controlled.

Controlling the gas outlet valve based on the gas pressure in the pressure container provides the advantage, that, on the one hand, the degree of carbonation in the beverage to be carbonated may be controlled, and, on the other hand, damage of the pressure container or any other parts of the beverage carbonating device may be prevented.

In the foregoing text parts, the term "control unit" has been mentioned in correspondence with several different control functions. These control functions may all be controlled by one and the same control unit. However, it is also possible to use separate entities for controlling the functions. The above-mentioned functions of the control unit can be combined with each other in any way without departing from the scope of protection of the present invention.

In a further refinement, the beverage carbonating device comprises a beverage vessel interface that is configured to receive a beverage vessel containing a beverage to be carbonated, and a dispenser that is fluidly connected to the gas outlet valve and configured to dispense the carbon dioxide gas into the beverage to be carbonated.

Thus, in this case the beverage to carbonated (e.g. water) has to be prefilled into the beverage vessel. The carbon dioxide produced by the presented beverage carbonating device is then dispensed via the dispenser preferably directly into the beverage.

As already mentioned before, the beverage vessel interface may be any type of interface to which the beverage vessel may be coupled. It may comprise an appropriate sealing mechanism for sealing the interface between the beverage carbonating device and the beverage vessel.

In an alternative refinement, the beverage carbonating device may comprise a beverage inlet for receiving a beverage to be carbonated from a beverage source, a beverage carbonating chamber that is fluidly connected to the gas outlet valve and the beverage inlet and configured to carbonate the beverage to be carbonated with the released carbon dioxide gas, and a dispenser that is configured to dispense the carbonated beverage.

In this case, the beverage is carbonated internally in the beverage carbonating device such that not only carbon dioxide but the already carbonated beverage is dispensed from it. This has the advantage that a user does not have to prefill the beverage vessel with water or any other type of liquid. The sparkling beverage can be tapped directly from the dispenser.

The beverage source, from which the beverage inlet receives the beverage to be carbonated, may be any type of beverage source, e.g. a beverage tank that may be integrated into the beverage carbonating device or a water tap that is connected to the beverage carbonating device (the beverage inlet).

In the latter mentioned refinement where the beverage is already carbonated internally in the beverage carbonating device, it is furthermore preferred that the dispenser comprises a check valve that is configured to open for the dispenser of the carbonated beverage depending on a pressure in the beverage carbonating chamber.

This check valve may be controlled by means of the control unit of the beverage carbonating device. Thereby, it is possible for the user to control the degree of carbonation of the beverage. The beverage carbonating device may, for example, comprise an interface that allows an end user to set the desired degree of carbonation. The control unit may then being configured to control the check valve at the dispenser depending on the set degree of carbonation which may be measured by means of the pressure in the beverage carbonating chamber.

In a further refinement, the beverage carbonating device comprises a pump that is configured to pump the beverage to be carbonated from the beverage inlet to the beverage carbonating chamber. This pump may be also controlled by the control unit depending on an actuation of the user interface and/or depending on a pressure detected in the beverage carbonating chamber.

### BRIEF DESCRIPTION OF THE DRAWINGS

These and other aspects of the invention will be apparent from and elucidated with reference to the embodiment(s) described hereinafter. In the following drawings
Fig. 1 shows a schematic view of a first embodiment of the beverage carbonating device according to the present invention;
Fig. 2 shows a schematic view of a second embodiment of the beverage carbonating device according to the present invention;
Fig. 3 shows a schematic view of a third embodiment of the beverage carbonating device according to the present invention;
Fig. 4 shows a schematic view of a fourth embodiment of the beverage carbonating device according to the present invention; and
Fig. 5 shows a schematic view of a fifth embodiment of the beverage carbonating device according to the present invention.

### DETAILED DESCRIPTION OF THE INVENTION

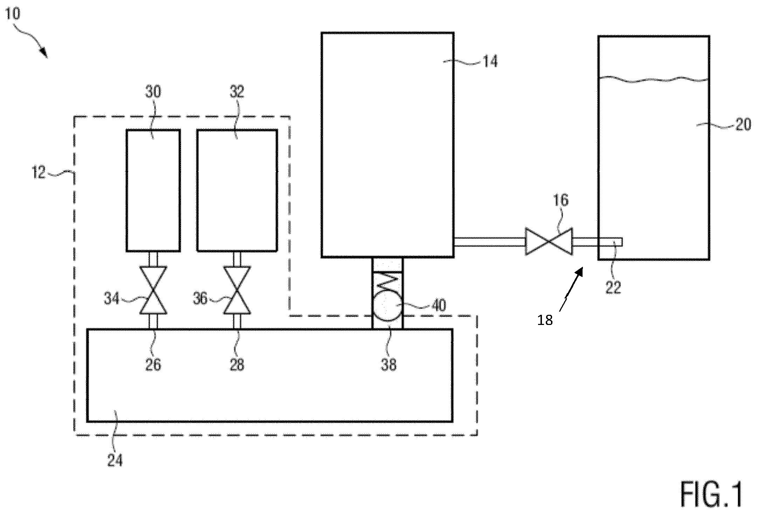

Fig. 1 shows a first embodiment of the beverage carbonating device in a schematic block diagram. The beverage carbonating device is therein denoted in its entirety by reference numeral 10.

The beverage carbonating device 10 according to this embodiment comprises a carbon dioxide production unit 12 for producing carbon dioxide gas. The carbon dioxide production unit is denoted by reference numeral 12 and schematically indicated by dotted line encircling several components of the carbon dioxide production unit 12 that are explained further below.

The beverage carbonating device 10 further comprises a pressure container 14 which serves to store the carbon dioxide gas that is produced in the carbon dioxide production unit 12. This pressure container 14 may comprise a tank in which the carbon dioxide gas can be stored in a pressurized gaseous state.

Still further, the beverage carbonating device 10 comprises a gas outlet valve 16. In the embodiment shown in Fig. 1, this gas outlet valve 16 comprises a mechanical valve that is configured to seal the pressure container 14 when the valve 16 is in a closed state and to release the carbon dioxide gas from the pressure container 14 when the valve 16 is in an open state.

The carbon dioxide gas that is produced by the beverage carbonating device 10 is in this embodiment released at a beverage vessel interface 18 into a beverage vessel 20. The beverage vessel 20 may comprise a bottle, glass or any other container that is suitable for receiving a beverage to be carbonated.

The beverage vessel interface 18 comprises in this embodiment a dispenser 22 that is fluidly connected to the gas outlet valve 16 and configured to be inserted into the beverage contained in the beverage vessel 20.

In the example schematically illustrated in Fig. 1, the dispenser 22 enters the beverage vessel 20 at a low position. However, it is to be noted that the dispenser 22 may enter the beverage to be carbonated through any suitable opening in the beverage vessel 20 that may be arranged at any arbitrary position of the beverage vessel 20.

By opening the gas outlet valve 16, which could be done in a mechanical way, either by pressing a button or by pressing the beverage vessel 20 onto an actuator integrated in the beverage vessel interface 18, the carbon dioxide gas produced by the beverage carbonating device 10 is released into the beverage that is pre-filled in the beverage vessel 20. The beverage is thereby carbonated. Using water as exemplarily beverage, this process may be exemplarily used for producing sparkling water.

The carbon dioxide gas is produced in the carbon dioxide production unit 12 within a mixing chamber 24. The mixing chamber 24 comprises two inlets 26, 28 that are herein denoted as first inlet 26 and second inlet 28.

Each of the inlets 26, 28 is connected to a reactant supply 30, 32. Reactant supply 30 is herein denoted as first reactant supply 30. Reactant supply 32 is herein denoted as second reactant supply 32.

In the simplest case, the reactant supplies 30, 32 are each simply realized as openings or receptacles for receiving the reactants in a manual way. However, the reactant supplies 30, 32 may also be realized as tanks or containers that are configured to store the reactants. These containers can be connected to the inlets 26, 28 of the mixing chamber 24 via valves 34, 36, as this is exemplarily sown in Fig. 1. The valves 34, 36 are herein also generally denoted as dosing units 34, 36, as they serve to dose the amount of the reactants supplied to the mixing chamber 24. In the simplest case, these valves 34, 36 are realized as mechanical valves that may be manually opened and closed.

It should be noted that the valves 34, 36 do not necessarily have to be provided. Especially in case the reactant supplies 30, 32 are realized as mere openings or receptacles, such valves 34, 36 are not needed. It is also possible to provide the reactants within a cartridge in which the reactants are separated (e.g. by a separating wall). In such case the reactants may be released into the mixing chamber 24 by means of pinching the cartridge with a suitable pinching element.

The inlets 26,28 may also include a mechanical transport mechanism (e.g. an Archimedes screw) or some kind of solid-powder dosing system (e.g. a mechanical flap that opens and closes).

The first reactant which is supplied via the first reactant supply 30 preferably comprises an acid, such as a citric acid, tartaric acid, vinegar or pyruvate. This acid is in the example shown in Fig. 1 preferably mixed with water to form the first reactant. The mixture may be stored as a pre-mixture of acid and water in the first reactant supply 30. The second reactant supply 32 may contain sodium bicarbonate stored in a solid state. Alternatively, also the acid may be stored in a solid state and the base may be dissolved. The reactants are therefore neither limited to any specific substance or a specific state of aggregation.

As soon as these two reactants get mixed in the mixing chamber 24 carbon dioxide gas is automatically produced. The produced carbon dioxide gas leaves the mixing chamber 24 and enters the pressure container 14. A connection interface 38 that connects the pressure container 14 to the mixing chamber 24 is configured to ensure that at least 90 % by volume of the fluid comprising the produced carbon dioxide gas that is entering the pressure container 14 is gaseous. In other words, this connection interface 38 may prevent liquid from entering the pressure container 14. The connection interface 38 is thereto preferably arranged at an upper side of the mixing chamber 24. In this way, only gas is leaving the mixing chamber 24, while the liquid containing the water, which was introduced into the mixing chamber 24 from the first reactant supply 30, remains in the mixing chamber 24. This remaining waste material may be dispensed from the mixing chamber 24 into a dump area or separate dump box which may be integrated into the device 10 or removable therefrom (for simplicity reasons not shown).

The connection interface 38 may comprise an overpressure valve 40. This overpressure valve may be realized as a mechanically actuated overpressure valve. The overpressure valve 40 thus opens as soon as a minimum amount of pressure is reached in the mixing chamber 24. The carbon dioxide gas will then flow from the mixing chamber 24 into the pressure container 14 either until the overpressure valve 40 is actively closed or until pressure equilibrium is reached between the pressure container 14 and the mixing chamber 24. Thanks to the provision of the pressure container 14 it is possible to produce carbon dioxide gas beforehand and keep it on stock until it is needed. When a user wants to carbonate his beverage, the carbon dioxide gas may be released instantaneously from the pressure container 14.

The connection interface 38 may also comprise a pump that is provided in addition to the valve 40 or instead of the valve 40. The advantage of a pump that fluidly connects the mixing chamber 24 to the pressure container 14 is the ability to thereby increase the pressure in the pressure container 14, allowing a quicker carbonation (as the amount of carbon dioxide dissolved in the beverage is a function of the partial pressure pCO₂) and allowing a smaller tank 14 for the same amount/mass of carbon dioxide. Further, in the embodiment shown in Fig. 1, all pressure is coming from the chemical reaction in the mixing chamber 24. The speed of this reaction is negatively influenced by a larger pCO₂. By adding a pump in place of or in addition to the valve 40, one would get more carbon dioxide gas out of the same amount of reactants.

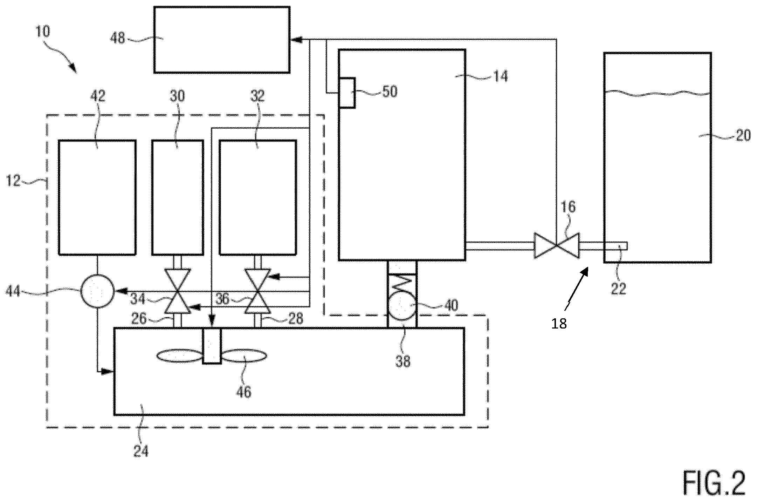

Fig. 2 shows a second embodiment of the beverage carbonating device 10 in a schematic block diagram. The function and principle of the therein shown beverage carbonating device 10 is more or less the same as the one shown in Fig. 1. However, several further refinements are included by means of additional components.

The carbon dioxide production unit 12 in this case comprises a further reactant supply 42. This further reactant supply 42 may comprise a water tank containing water that is used for the production of carbon dioxide gas. The water contained in this water tank 42 is preferably pumped into the mixing chamber 24 by means of a pump 44. This pump may help to pump water and/or at least one of the reactants into the mixing chamber 24, in order to initiate or continue the carbon dioxide gas production.

Since the water is in this embodiment provided via a separate inlet into the mixing chamber 24, the reactant supply 30 may in this case contain pure acid.

The mixing chamber 24 furthermore comprises a motorized mixing element 46 that is configured to actively mix the reactants in the mixing chamber 24. This active mixing further accelerates the carbon dioxide production.

Another improvement of the second embodiment shown in Fig. 2 is the provision of a control unit 48. This control unit 48 may comprise a processor or any type of other suitable electronic circuitry that is configured to process input signals and generate output signals based on these input signals and a programmed control logic. For example, the control unit 48 may be configured to control valves 16, 34 and 36. The valves 16, 34, 36 may in this case be realized as electromechanical valves. The control unit 48 may also be configured to control the operation of the mixing element 46. Still further, the control unit 48 may be configured to control the operation of the pump 44. It shall be noted that one and the same control unit 48 may be used for controlling all the aforementioned components 16, 34, 36, 44 and 46 of the beverage carbonating device 10. However, each and every component may also be controlled by means of separate entities. Even in such case, these separate entities would be summarized as control unit 48 in the meaning of the present invention. Still further, it shall be noted that all possible permutations of controlling all, some or only one of the components 16, 34, 36, 44 and 46 are possible. For example, the control unit 48 may be configured to control solely the valves 34, 36, while valve 16 is realized as a mechanical valve, as it is shown in Fig. 1.

The control unit 48 is preferably configured to control the components of the beverage carbonating device 10 depending on an internal pressure of the pressure container 14. This pressure in the pressure container 14 may be detected by means of a pressure sensor 50. This pressure sensor 50 is preferably configured to detect a pressure in the pressure container 14 and generate a signal that depends from said pressure. The signal of the pressure sensor 50 is used in the control unit 48 as input signal.

The control unit 48 may be configured to control the carbon dioxide production unit 12 based on the gas pressure detected by the pressure sensor 50. Thereto, the control unit 48 may control valves 34, 36 to open and pump 44 to start pumping, if the pressure detected by the pressure sensor 50 is below a predefined minimum pressure threshold. Then, the control unit 48 may also turn on the mixing element 46.

On the other hand, the control unit 48 may be configured to close the valves 34, 36 and turn off the pump 44 and the mixing element 46 if the pressure detected by the pressure sensor 50 is above a predefined upper pressure threshold.

The control unit 48 may be furthermore configured to control the gas outlet valve 16 based on the gas pressure that is detected by the pressure sensor 50. For example, the control unit 48 may be configured to control the gas outlet valve 16 to open only if the pressure detected by the pressure sensor 50 is above a first pressure threshold. If the pressure is above a second pressure threshold being greater than the first pressure threshold, the control unit 48 may be configured to open in order to prevent a damage of the pressure container 14 and its components. Still further, the control unit 48 may be configured to control the amount of time the gas outlet valve 16 is opened depending on the pressure detected by the pressure sensor 50. This may be used, for example, to dose the level of carbonation in the beverage to be carbonated according to the user's needs.

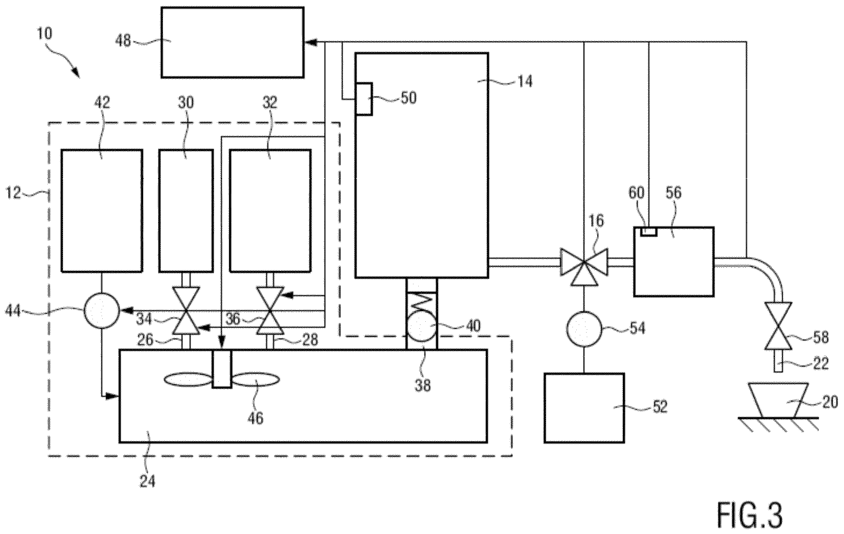

Fig. 3 shows a third embodiment of the beverage carbonating device 10. Most of the components of the beverage carbonating device 10 shown in Fig. 3 resemble or equal the components of the beverage carbonating device 10 of Fig. 2, and are therefore not discussed again. One of the differences of the embodiment shown in Fig. 3 is however that the dispenser 22 in this case dispenses the already carbonated beverage instead of the carbon dioxide gas in the gaseous state. The dispenser 22 therefore acts as a tap from which carbonated beverage may be tapped into a beverage vessel 20 that could be realized as a glass.

The beverage carbonating device 10 shown in Fig. 3 additionally comprises a beverage inlet 52 for receiving a beverage to be carbonated from a beverage source. The beverage inlet 52 may either contain the beverage source or it may be connected to a beverage source. The beverage inlet 52 may comprise a water tank. Alternatively, the beverage inlet is connected to a water supply.

Beverage received at the beverage inlet 52 is pumped by a pump 54 into a beverage carbonating chamber 56. The pump 54 may be controlled by the control unit 48. Similarly, also the valve 16, which is in this case realized as a three-way valve, may be controlled by the control unit 48.

The beverage carbonating chamber 56 is fluidly connected to the gas outlet valve 16 and the beverage inlet 52 (if valve 16 is opened). The beverage carbonating chamber 56 may include a carbonator that is configured to carbonate the beverage with the carbon dioxide gas that is released from the pressure container 14.

The dispenser 22 may comprise a check valve 58 that is configured to open for the dispense of the carbonated beverage depending on a pressure in the beverage carbonating chamber 56. The beverage carbonating chamber 56 may comprise a second pressure sensor 60 for detecting the pressure within the beverage carbonating chamber 56. The control unit 48 may be configured to control the check valve 58 depending on the pressure detected by the pressure sensor 60. In this way, the rate of carbonation in the carbonated beverage leaving the dispenser 22 may be controlled to equal the rate of carbonation that is desired/selected by the user via a user interface (not shown).

It shall be noted that components 48 and 52-60 may also be included in the beverage carbonating device 10 according to the first embodiment shown in Fig. 1. In other words, also the first embodiment shown in Fig. 1 may be adapted in the way shown in Fig. 3 so as to be able to carbonate the beverage internally in the device.

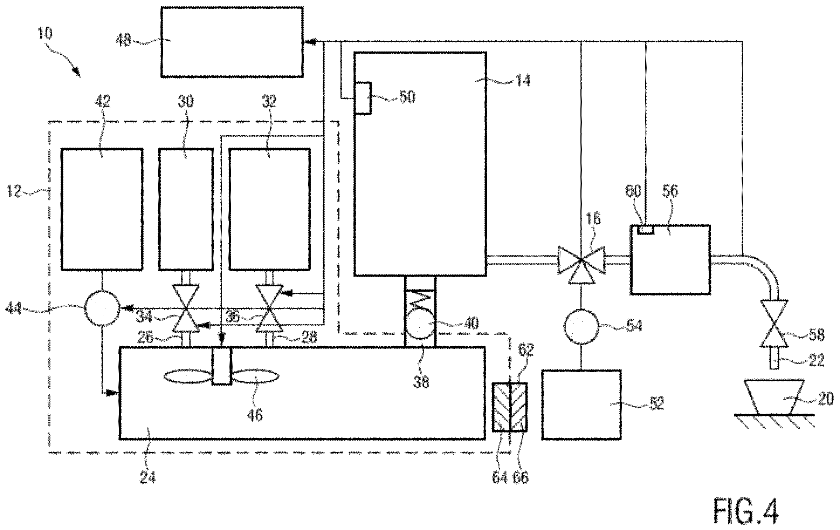

Fig. 4 shows a fourth embodiment of the beverage carbonating device 10. The structure of the beverage carbonating device 10 shown in Fig. 4 is similar to the structure of the beverage carbonating device 10 shown in Fig. 3. Additionally, the beverage carbonating device 10 according to the fourth embodiment comprises a heat transfer device 62. This heat transfer device 62 comprises a hot side 64 and a cold side 66. The hot side 64 of the heat transfer device 62 is used to heat the mixing chamber 24, while the cold side 66 of the heat transfer device 62 is used to cool the beverage to be carbonated at any section of the beverage carbonating device 10 upstream the dispenser 22. The cold side 66 of the heat transfer device 62 may be connected, for example, to the beverage inlet 52 (e.g. a beverage tank), to the beverage carbonating chamber 56 and/or to any other conduct/pipe/line-section that connects the beverage inlet 52 to the dispenser 22 and conducts the beverage to be carbonated.

In this way, it is possible to heat the mixing chamber 24 and cool the beverage to be carbonated by one and the same device, i.e. by means of the heat transfer device 62. This heat transfer device 62 may comprise a Peltier device, a thermoelectric cooler, a heat exchanger, a chiller or any other type of heat transfer device. A Peltier device is particularly advantageous, as it heats and cools by means of a solid-state active heat pump which transfers heat from one side of the device to the other, with consumption of electrical energy, depending on the direction of the current. Peltier devices are comparatively small, though very effective.

The heat generated in the mixing chamber 24 by means of the heat transfer device 62 is particularly advantageous, as it accelerates the carbon dioxide production. Cooling the beverage to be carbonated is extremely beneficial as well, as it facilitates to solve the carbon dioxide into the beverage. Thus, both reactions, the carbon dioxide generation and the carbonation of the beverage, are improved by one and the same device.

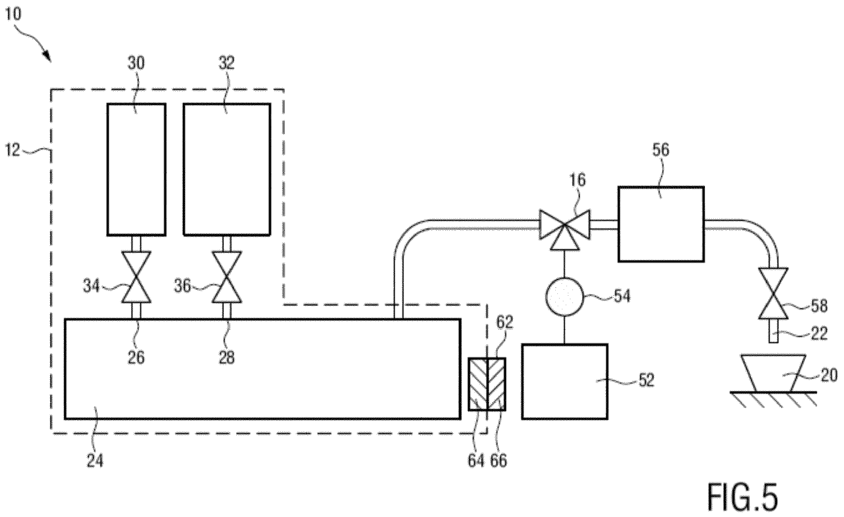

It shall be noted that the beneficial effect that results from the addition of the heat transfer device 62 can be used independently from the aforementioned effect of storing the generating carbon dioxide gas in the pressure container 14. The heat transfer device 62 may thus also be used in a beverage carbonating device 10 that does not comprise a pressure container 14 of the type explained before. Such an embodiment without pressure container 14 is schematically shown in Fig. 5.

In the embodiment shown in Fig. 5, the carbon dioxide production unit 12 is realized in a similar manner as in the embodiment shown in Fig. 1. However, in contrast to the embodiment shown in Fig. 1, the mixing chamber 24 is according to the fifth embodiment shown in Fig. 5 connected to the gas outlet valve 16 without a pressure container 14 inbetween. In contrast to the embodiment shown in Fig. 4, the carbon dioxide gas is therefore generated instantaneously when the carbonation process of the beverage is started.

It follows a list of further clauses that are to be considered as further embodiments:
1. A beverage carbonating device 10, comprising:
   a carbon dioxide production unit 12 that is configured to produce carbon dioxide gas by mixing at least two reactants;
   a beverage inlet 52 for receiving a beverage to be carbonated from a beverage source;
   a beverage carbonating chamber 56 that is configured to receive the beverage to be carbonated from the beverage inlet 52 and the produced carbon dioxide gas from the carbon dioxide production unit 12, and to carbonate the beverage to be carbonated with the produced carbon dioxide gas;
   a dispenser 22 that is configured to dispense the carbonated beverage; and
   a heat transfer device 62 having a cold side 66 that is configured to cool the beverage to be carbonated and a hot side 64 that is configured to heat at least a part of the carbon dioxide production unit 12.
2. The beverage carbonating device 10 according to clause 1,
   wherein the heat transfer device 62 comprises a Peltier element.
3. The beverage carbonating device 10 according to clause 1 or 2,
   wherein the carbon dioxide production unit 12 comprises a mixing chamber 24 for the mixing of the at least two reactants, and
   wherein the hot side 64 of the heat transfer device 62 is configured to heat the mixing chamber 24.
4. The beverage carbonating device 10 according to clause 3, wherein the mixing chamber 24 comprises a motorized mixing element 46 that is configured to actively mix the at least two reactants in the mixing chamber 24.
5. The beverage carbonating device 10 according to clause 3 or 4, wherein the carbon dioxide production unit 12 comprises a pump 44 that is configured to pump water and/or at least one of the reactants into the mixing chamber 24.
6. The beverage carbonating device 10 according to any of clauses 3-5, wherein the mixing chamber 24 comprises a first inlet 26 that is fluidly connected to a first reactant supply 30 via which a first of the at least two reactants is supplied, and wherein the mixing chamber 24 comprises a second inlet 28 that is fluidly connected to a second reactant supply 32 via which a second of the at least two reactants is supplied.
7. The beverage carbonating device according to claim 6, wherein the first reactant supply 30 comprises a first dosing unit 34 that is configured to dose an amount of the first reactant supplied to the first inlet 26, and/or wherein the second reactant supply 32 comprises a second dosing unit 36 that is configured to dose an amount of the second reactant supplied to the second inlet 28.
8. The beverage carbonating device according to any one of clauses 1-7, wherein the dispenser 22 comprises a check valve 58 that is configured to open for the dispense of the carbonated beverage 10 depending on a pressure in the beverage carbonating chamber 56.
9. The beverage carbonating device according to any one of clauses 1-8, comprising a pump 54 that is configured to pump the beverage to be carbonated from the beverage inlet 52 to the beverage carbonating chamber 56.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A beverage carbonating device (10), comprising:
a carbon dioxide production unit (12) that is configured to produce carbon dioxide gas by mixing reactants;
a pressure container (14) that is fluidly connected or connectable to the carbon dioxide production unit (12) and configured to store the produced carbon dioxide gas in a pressurized gaseous state; and
a gas outlet valve (16) that is fluidly connected to the pressure container (14) and configured to seal the pressure container (14) when being closed and to release the carbon dioxide gas in the gaseous state from the pressure container (14) when being opened.

2. The beverage carbonating device according to claim 1, comprising a control unit (48) that is configured to control at least one of:
- the carbon dioxide production unit (12) to produce the carbon dioxide gas and to store the produced carbon dioxide gas in the pressurized gaseous state in the pressure container (14);
- the gas outlet valve (16) to be closed while storing the produced carbon dioxide gas in the pressure container (14); and
- the gas outlet valve (16) to open, so as to release the stored pressurized carbon dioxide gas upon a user request.

3. The beverage carbonating device according to claim 1 or 2, further comprising a connection interface (38) for connecting the pressure container (14) to the carbon dioxide production unit (12).

4. The beverage carbonating device according to claim 3, wherein the connection interface (38) is configured to ensure that at least 90% by volume of a fluid comprising the produced carbon dioxide gas and entering the pressure container (14) is gaseous.

5. The beverage carbonating device according to claim 3 or 4, wherein the connection interface (38) comprises an overpressure valve (40) and/or a pump.

6. The beverage carbonating device according to any of claims 1-5, wherein the carbon dioxide production unit (12) comprises a motorized mixing element (46) that is configured to actively mix the reactants.

7. The beverage carbonating device according to any of claims 1-6, wherein the carbon dioxide production unit (12) comprises a mixing chamber (24) for the mixing of the reactants.

8. The beverage carbonating device according to claim 7, wherein the carbon dioxide production unit (12) comprises a pump (44) that is configured to pump water and/or a reactant into the mixing chamber (24).

9. The beverage carbonating device according to any of claims 1-8, wherein the carbon dioxide production unit (12) comprises a first reactant supply (30) and a second reactant supply (32) and dosing means (34, 36) configured to dose first and/or second reactant from the respective supplies (30, 32).

10. The beverage carbonating device according to any of claims 1-9, comprising a pressure sensor (50) that is configured to detect a gas pressure in the pressure container (14); and
a control unit (48) that is configured to control the carbon dioxide production unit (12) and/or the gas outlet valve (16) based on the gas pressure that is detected by the pressure sensor (50).

11. The beverage carbonating device according to any of claims 1-10, comprising:
a beverage vessel interface (18) that is configured to receive a beverage vessel (20) that in use contains a beverage to be carbonated; and
a dispenser (22) that is fluidly connected to the gas outlet valve (16) and configured to dispense the carbon dioxide gas into the beverage to be carbonated.

12. The beverage carbonating device according to any of claims 1-10, comprising:
a beverage inlet (52) for receiving a beverage to be carbonated from a beverage source;
a beverage carbonating chamber (56) that is fluidly connected to the gas outlet valve (16) and the beverage inlet (52) and configured to carbonate the beverage to be carbonated with the released carbon dioxide gas; and
a dispenser (22) that is configured to dispense the carbonated beverage.

13. The beverage carbonating device according to claim 12, wherein the dispenser (22) comprises a check valve (58) that is configured to open for the dispense of the carbonated beverage depending on a pressure in the beverage carbonating chamber (56).

14. The beverage carbonating device according to claim 12 or 13, comprising a pump (54) that is configured to pump the beverage to be carbonated from the beverage inlet (52) to the beverage carbonating chamber (56).
